# EUROPÄISCHE PATENTSCHRIFT

(11) **EP 0 834 249 B1**
(45) Veröffentlichungstag und Bekanntmachung des Hinweises auf die Patenterteilung: **08.12.1999**
(21) Anmeldenummer: 97105013.3
(22) Anmeldetag: 25.03.1997
(51) Int. Cl.: A01G 9/12

(54) **Pflanzsystem**
Planting system
Système de plantation

(30) Priorität: 04.10.1996 DE 29617312 U
(43) Veröffentlichungstag der Anmeldung: 08.04.1998
(73) Patentinhaber: Twistringer RBM Dränfilter GmbH & Co. KG, 27239 Twistringen (DE); Blome, Bernhard, 27239 Twistringen (DE)
(72) Erfinder: Roess, Thomas, 27239 Twistringen (DE); Blome, Bernhard, 27239 Twistringen (DE)
(74) Vertreter: Patentanwälte Hauck, Graalfs, Wehnert, Döring, Siemons

(56) Entgegenhaltungen:
- EP-A- 0 530 080
- DE-A- 3 923 796
- DE-U- 9 412 433
- US-A- 2 900 759

## Beschreibung

Die Erfindung bezieht sich auf ein Pflanzsystem nach dem Anspruch 1.

Es ist bekannt, Zierpflanzen und Gehölze in Töpfen aufzuziehen. Die mehr oder weniger großen Töpfe aus Kunststoffmaterial, Ton oder dergleichen werden mit einem geeigneten Substrat aufgefüllt, bevor ein Steckling oder Samen bzw. Zwiebel eingelegt werden.

Viele Zierpflanzen und auch verschiedene Gehölze werden mit der sogenannten Hochstammkultur aufgezogen. Sie erfordert einen ständigen Beschnitt der Seitentriebe, damit die Wachstumsenergie in den Haupttrieb eingeleitet wird. Diese Zuchtmethode ist langwierig und mit Energieaufwand verbunden.

Aus DE-A-39 23 796 ist bekanntgeworden, in ein oben offenes Rohr aus Kunststoffmaterial, das mit Substrat gefüllt ist, einen Steckling oder Keimling einzusetzen. Das Rohr ist unten geöffnet, so daß Wurzeln des Keimlings in einen Topf hineinwachsen können, in den das Rohr gesteckt wird. Zu diesem Zweck hat der Topf eine trichterartige Erhebung, in die ein konisch zulaufender Fuß des Rohrs einsteckbar ist. Um dem Rohr ein entsprechendes Aussehen zu verleihen, kann es mit Korkstaub oder Korkstückchen beklebt werden.

Eine ähnliche Anordnung ist auch aus EP-A-0 530 080 bekanntgeworden, bei der das gegebenenfalls geneigt angeordnete Rohr am unteren Ende eine Erweiterung aufweist, mit der es in das Substrat eines Topfes eingesetzt wird.

Aus DE-U-94 12 433 ist bekanntgeworden, ein Pflanzrohr mit einer oberen trichterförmigen Erweiterung zu versehen, die auch als separates Teil auf das Rohr steckbar ist. Der untere Teil des Rohrs ist als Spitze ausgebildet mit Durchbrechungen, durch welche Wurzeln hindurchwachsen können.

Aus US-A-3 188 771 ist ein Pflanzsystem bekanntgeworden, bei dem ein am unteren Ende spitzes Rohr aus Kunststoffmaterial in einen Topf mit Substrat eingesetzt wird. Das Innere des Rohrs weist ebenfalls ein Substrat auf. Das Rohr dient als Halterung für eine zu rankende Pflanze, von der Luftwurzeln über Öffnungen in das Innere des Rohrs hineinwachsen.

Aus US-A-3 958 365 ist ein Pflanztopf bekanntgeworden, dessen Inneres durch eine Faserschicht gebildet ist.

Der Erfindung liegt die Aufgabe zugrunde, ein Pflanzsystem zu schaffen, mit dem der Eindruck eines sogenannten Hochstammgewächses erzielt wird und das aus einfachen Teilen herstellbar ist, wobei übliche Pflanztöpfe verwendet werden können.

Diese Aufgabe wird durch die Merkmale des Patentanspruchs 1 gelöst.

Erfindungsgemäß weist das am oberen Ende den Keimling oder Sämling aufnehmende Rohr am unteren Ende eine Fußanordnung auf, die separat hergestellt ist mit einem Ringabschnitt, an dem stelzenartige Füße angebracht oder angeformt sind. Dadurch kann das Rohr in einen herkömmlichen Pflanztopf eingesetzt werden und insbesondere so lange stabil gehalten werden, bis eine Verwurzelung im Substrat des Pflanztopfes stattfindet. Der separate Fuß kann auf einfach Weise aus Kunststoffmaterial hergestellt werden. Die Füße sind vorzugsweise so bemessen, daß sie bis zum Bodenrand des Topfes reichen, wodurch der Fuß noch sicherer gehalten wird.

Das Rohr kann aus einem geeigneten Material, wie Kunststoff, Metall und Holz bestehen. Es kann auch als ein Bambusrohr Verwendung finden, wobei jedoch ein Kunststoffrohr wegen der einfacheren Herstellung vorzuziehen ist. Das Rohr kann gerade oder zwischen den Enden in beliebiger Form gebogen sein. Es weist vorzugsweise an seinem oberen Ende eine Erweiterung auf, die als separater Trichter ausgeführt sein kann, um eine größere Anzahl von Säm- oder Keimlingen aufzunehmen.

Das Fasermaterial, das aus Schutzgründen lichtundurchlässig und wärmedämmend ist, ist vorzugsweise aus Kokosfasern gebildet. Das Kokosfasermaterial kann mit Hilfe eines umgewickelten Fadens, vorzugsweise in Kreuzwicklung, befestigt werden. Alternativ kann das Fasermaterial auch durch Klebung am Rohr befestigt werden.

Für die Verbindung zwischen Rohr und Fußanordnung sind verschiedene Möglichkeiten denkbar. Nach einer Ausgestaltung wird das Rohr in den Ringabschnitt des Fußes eingesteckt, wobei der Ringabschnitt einen Absatz aufweist, auf dem das Rohr aufsitzt. Alternativ kann der Ringabschnitt in das Rohr eingeschoben werden und dort insbesondere durch Reibung gehalten werden. Auch dieser Ringabschnitt kann einen ihn außen umgebenden Absatz aufweisen zwecks Abstützung des Rohres.

Die Erfindung wird nachfolgend anhand von Zeichnungen näher erläutert.
Fig. 1 zeigt teilweise im Schnitt eine erste Ausführungsform eines Pflanzsystems.
Fig. 2 zeigt eine zweite Ausführungsform des Pflanzsystems.
Fig. 3 zeigt eine dritte Ausführungsform des Pflanzsystems.
Fig. 4 zeigt eine vierte Ausführungsform des Pflanzsystems.
Fig. 5 zeigt eine Ausführungsform des Pflanzsystems nach der Erfindung.
Fig. 6 zeigt eine perspektivische Einzelheit des Pflanzsystems nach Fig. 5.
Fig. 7 zeigt in auseinandergezogener Darstellung eine weitere Ausführungsform eines Pflanzsystems nach der Erfindung.
Fig. 8 zeigt eine weitere Ausführungsform eines Pflanzsystems.

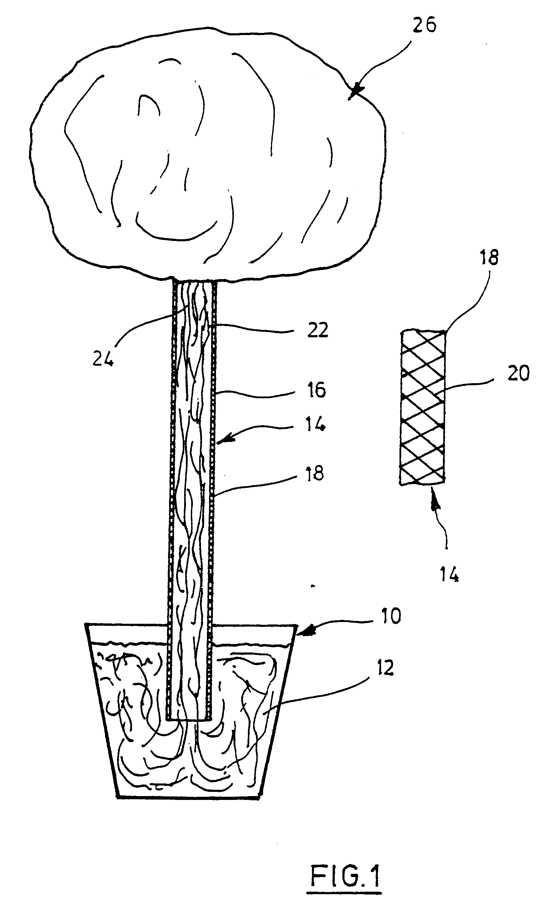

In Fig. 1 ist im Schnitt ein üblicher konischer Pflanztopf 10 gezeigt, der mit einem Substrat 10 aufgefüllt ist. In den Topf 10 ist von oben ein Steckrohr 16 eingeführt mit einem Abstand zum Boden des Topfes 12. Das Steckrohr 14 setzt sich zusammen aus einem Rohrabschnitt 16 aus relativ steifem Material, beispielsweise aus Kunststoff, Metall, Holz oder dergleichen, das mit einer Schicht aus Fasermaterial 18 ummantelt ist. Das Fasermaterial 18 kann angeklebt sein oder mit Hilfe eines Fadens befestigt werden. Eine derartige Befestigungsweise geht aus der rechten Darstellung in Fig. 1 hervor, die eine Kreuzwicklung 20 zeigt.

Auch das Rohr ist mit einem Substrat 22 bis zum oberen Ende gefüllt.

Am oberen Ende des Deckrohrs 14 wird ein Steckling in das Substrat 22 eingepflanzt. Wurzelstränge 24 durchdringen die Substratschicht 22 und wachsen aus dem unteren Ende des Steckrohrs 14 heraus in das Substrat des Topfes. Durch die Wurzelbildung im Topf 10 wird auch das Steckrohr 14 stärker im Geflecht verankert, so daß es das sich bildende Gewächs 26 besser abstützen kann.

Die Nährstoff- und Wasserversorgung ist unproblematisch. Es erfolgt eine direkte Aufnahme durch die Wurzelstränge im Topf 10, so daß eine unmittelbare Versorgung der Pflanze 26 stattfindet.

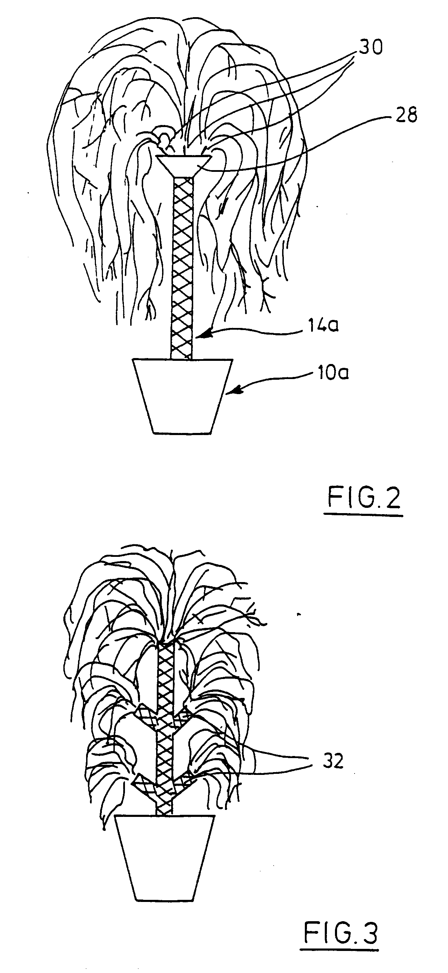

Bei der Ausführungsform nach Fig. 2 ist in einem Topf 10a ein Steckrohr 14a eingeführt, das am oberen Ende bei 28 trichterförmig erweitert ist. Der Trichter 28 kann einteilig mit dem Rohr geformt sein oder als separates Teil eingesteckt. Aufgrund der Erweiterung 28 können mehrere Stecklinge eingepflanzt werden, wie bei 30 angedeutet.

Bei der Ausführungsform nach Fig. 3 ist im Pflanztopf 10b ein Steckrohr 14b eingesteckt, das grundsätzlich gleich aufgebaut ist wie das Steckrohr 14 bzw. 14a nach den Figuren 1 und 2, das jedoch ferner paarweise Abzweigstutzen 32 aufweist, die schräg nach oben ragen, etwa in einem Winkel von 30° zur Vertikalen. Die Abzweigabschnitte 32 sind ebenfalls mit Substrat gefüllt und können Stecklinge aufnehmen zur Bildung von Pflanzen, wie dies in Fig. 3 dargestellt ist.

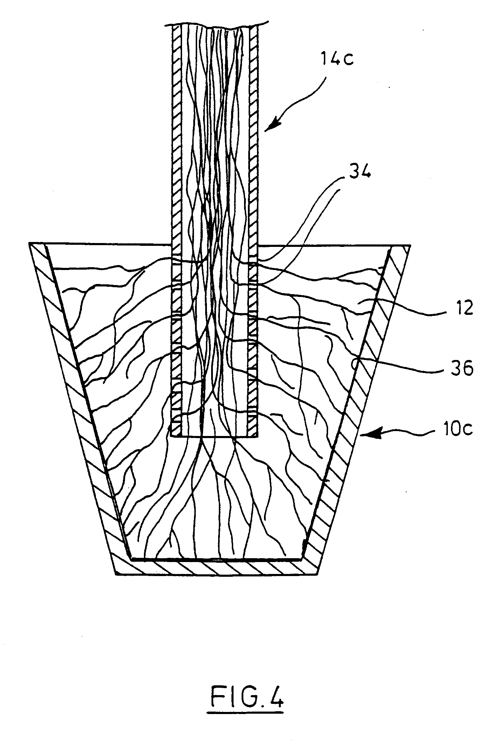

In Fig. 4 ist ein Pflanzrohr 14c mit seinem unteren Ende im Substrat 12 des Pflanztopfs 10c eingesetzt, wobei das eingesetzte Ende mit einer Reihe von seitlichen Öffnungen 34 versehen ist, über die die Wurzeln in das Substrat 12 hineinwachsen können.

Der Pflanztopf 10c hat ferner auf der Innenseite eine Beschichtung 36 aus Fasermaterial, beispielsweise in Form einer Matte, die vor dem Einfüllen des Substrats 12 eingelegt ist. Sie ermöglicht das Hineinwachsen von Wurzelenden in die Schicht und damit eine Verfestigung des Wurzelwerks und damit eine bessere Abstützung des Rohrs 14c.

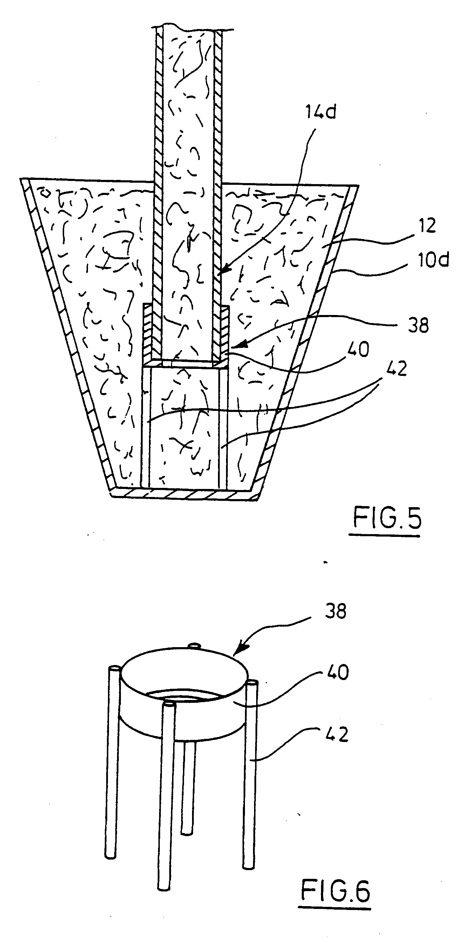

In Fig. 5 weist ein mit lichtundurchlässigem und wärmedämmendem Fasermaterial ummanteltes Pflanzrohr 14d, das in das Substrat 12 eines Topfes 10d eingesetzt ist, eine Fußanordnung 38 auf, bestehend aus einem Ring 40, der um das untere Ende des Rohrs 14d herumgelegt und axial festgelegt ist und mehreren Stelzfüßen 42, die im Umfangsabstand, beispielsweise von 90°, am Ring 40 angebracht sind. Über die Stelzfüße 42 stützt sich das Rohr 14d am Boden ab und ermöglicht dadurch eine sichere Position des Pfanzrohrs 14d, ohne daß das Herauswachsen des Wurzelwerks behindert ist.

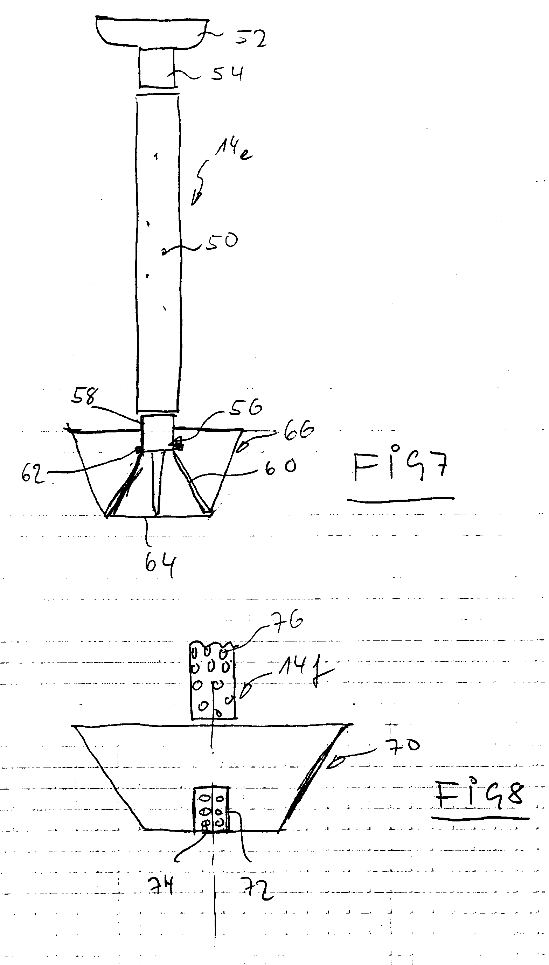

In Fig. 7 ist ein Rohr 14e dargestellt, das oben und unten geöffnet ist und das relativ kleine Löcher 50 aufweist, durch die eine Belüftung des Substrats im Rohr 14e erfolgen kann. Auf das Rohr aufgesetzt wird eine Schale 52, die an der Unterseite einen Rohrstutzen 54 aufweist, der in das Rohr 14e einsteckbar ist und dort im Preßsitz gehalten werden kann. Die Schale 52 dient zur Aufnahme eines oder mehrerer Stecklinge oder dergleichen. Es versteht sich, daß auch die Schale 52 mit Substrat zumindest teilweise aufgefüllt ist.

Am unteren Ende des Rohrs 50 ist ein Fuß 56 vorgesehen, der aus einem Rohrabschnitt 58 und mehreren im Umfangsabstand beabstandeten Fußabschnitten 60 besteht, die nach unten divergieren. Der Rohrabschnitt 58 ist in das Rohr 14e einsteckbar und darin durch Preßsitz gehalten. Eine radiale Erweiterung 62 am Rohrabschnitt 58 verhindert, daß der Rohrabschnitt 58 so weit eingesteckt wird. Die Fußabschnitte 60 sind in ihrer Winkelung so bemessen, daß sie sich am Randbereich des Bodens 64 des Topfes 66 abstützen. Dadurch erfolgt eine automatische Zentrierung des Rohrs 50 im Topf 66. Es versteht sich, daß bei einer derartigen Anwendung die Füße 56 an die Abmessungen der Töpfe 66 anzupassen sind.

Zweckmäßigerweise und auch das Rohr 14e mit einer lichtundurchlässigen und wärmedämmenden Ummantelung versehen, um das Wurzelgeflecht innerhalb des Rohres gegen Licht- und Wärmeeinwirkung zu schützen.

In Fig. 8 ist ein Pflanztopf 70 dargestellt, dessen Boden einen nach oben weisenden rohrförmigen Ansatz 72 aufweist mit Löchern 74. Der Ansatz 72 ist so geformt, daß ein Rohr 14f entsprechend dem Rohr 14e über den Ansatz 72 gesteckt werden kann, vorzugsweise über Reibung. Dadurch ist das Rohr 14e sicher im Topf 70 gehalten. Das Rohr 14f hat im unteren Endbereich Öffnungen 76, so daß über die Öffnungen 74 und 76 Wurzeln nach außen in den Topf einwachsen können.

## Patentansprüche

1. Pflanzsystem zur Aufzucht von Zierpflanzen und Gehölzen mit einem Topf (10a, 10b, 10d, 66) zur Aufnahme von Substrat (12), einem steifen Rohr (16), das ebenfalls mit Substrat (22) gefüllt und am unteren Ende offen ist, einer sich am Boden des Topfes abstützenden Fußanordnung (38, 56), dadurch gekennzeichnet, daß die Fußanordnung einen am Rohr (16) lösbar anbringbaren Ringabschnitt (40, 58) aufweist, an dem stelzenartige, sich am Boden des Topfes abstützende Füße (42) angebracht sind, die seitliche Durchgänge bilden und das Rohr (16) von einer Schicht (18) aus lichtundurchlässigem und wärmedämmendem Fasermaterial ummantelt ist.

2. Pflanzsystem nach Anspruch 1, dadurch gekennzeichnet, daß das Material des Rohrs (16) aus Kunststoff, Metall oder Holz besteht.

3. Pflanzsystem nach einem der Ansprüche 1 oder 2, dadurch gekennzeichnet, daß das Rohr (16) ein Bambusrohr ist.

4. Pflanzsystem nach einem der Ansprüche 1 bis 3, dadurch gekennzeichnet, daß das Rohr (16) gerade oder zwischen den Enden in eine beliebige Form gebogen ist.

5. Pflanzsystem nach einem der Ansprüche 1 bis 4, dadurch gekennzeichnet, daß das Rohr am oberen Ende eine Erweiterung (28) aufweist, vorzugsweise eine trichterförmige Erweiterung.

6. Pflanzsystem nach Anspruch 5, gekennzeichnet durch einen separaten Trichter, der in das obere Ende des Rohrs einsteckbar ist.

7. Pflanzsystem nach einem der Ansprüche 1 bis 6, dadurch gekennzeichnet, daß das Rohr zwischen den Enden Abzweigstutzen (32) aufweist, die schräg nach oben weisen.

8. Pflanzsystem nach einem der Ansprüche 1 bis 7, dadurch gekennzeichnet, daß das Fasermaterial durch einen umgewickelten Faden (20), vorzugsweise in Kreuzwicklung, befestigt ist.

9. Pflanzsystem nach einem der Ansprüche 1 bis 7, dadurch gekennzeichnet, daß das Fasermaterial am Rohr durch Klebung befestigt ist.

10. Pflanzsystem nach einem der Ansprüche 1 bis 9, dadurch gekennzeichnet, daß der Pflanztopf (10c) an der Innenseite eine Schicht (36) aus Fasermaterial aufweist, vorzugsweise aus Kokosfasern.

11. Pflanzsystem nach einem der Ansprüche 1 bis 10, dadurch gekennzeichnet, daß das Rohr in den Ringabschnitt (14) eingesteckt wird und der Ringabschnitt einen Absatz aufweist, auf dem das Ende des Rohrs aufsitzt.

12. Pflanzsystem nach einem der Ansprüche 1 bis 10, dadurch gekennzeichnet, daß das Rohr über den Ringabschnitt geschoben wird, vorzugsweise durch Reibung und mit seinem Ende auf einem ringförmigen Absatz (62) aufsitzt.

13. Pflanzsystem nach einem der Ansprüche 1 bis 12, dadurch gekennzeichnet, daß das Substrat im Rohr ein staubförmiges, körniges oder ähnliches Material ist, das bei Hinzutritt von Wasser aufquillt.

14. Pflanzsystem nach einem der Ansprüche 1 bis 13, dadurch gekennzeichnet, daß die Füße (60) der Fußanordnung bis zum Rand des Topfbodens (64) reichen.

## Claims

1. A planting system for cultivating ornamental plants and treelike plants, with a pot (10a, 10b, 10d, 66) for receiving a substrate (12), with a rigid tube (16) which is likewise filled with substrate (22) and open at the lower end, with a foot arrangement (38, 56) supported on the base of the pot, characterised in that the foot arrangement comprises a ring section (40, 58) which is releasably attachable on the tube (16) and on which there are attached stilt-like feet (42) which are supported on the base of the pot and which form lateral passages and the tube (18) is encased by a layer (18) of opaque and heat-insulating fibre material.

2. A planting system according to claim 1, characterised in that the material of the tube (16) consists of plastic, metal or wood.

3. A planting system according to one of claims 1 or 2, characterised in that the tube (16) is a bamboo tube.

4. A planting system according to one of claims 1 to 3, characterised in that the tube (16) is straight or is bent into any shape between the ends.

5. A planting system according to one of the claims 1 to 4, characterised in that the tube at the upper end comprises an extension (28), preferably a funnel-shaped extension.

6. A planting system according to claim 5, characterised by a separate funnel which can be inserted into the upper end of the tube.

7. A planting system according to one of the claims 1 to 6, characterised in that the tube between the end comprises branching connection pieces (32) which point obliquely upwards.

8. A planting system according to one of the claims 1 to 7, characterised in that the fibre material is fastened by a wrapped-around thread (20), preferably a crosswinding.

9. A planting system according to one of claims 1 to 7, characterised in that the fibre material is fastened on the tube by adhesing.

10. A planting system according to one of claims 1 to 9, characterised in that the plant pot (10c) comprises a layer (36) of fibre material on the inner side, preferably of coconut fibers.

11. A planting system according to one of claims 1 to 10, characterised in that the tube is inserted into the ring section (14) and the ring section comprises a shoulder on which the end of the tube is seated.

12. A planting system according to one of claims 1 to 10, characterised in that the tube is pushed over the ring section, preferably by friction and with its end is seated on an annular shoulder (62).

13. A planting system according to one of the claims 1 to 12, characterised in that the substrate in the tube is a dust-like, granular or similar material which swells up with the entry of water.

14. A planting system according to one of claims 1 to 13, characterised in that the feet (60) of the foot arrangement reach up to the edge of the pot base (64).

## Revendications

1. Système de plantation pour la culture de plantes d'ornement et de faisceaux de tiges, comportant un pot (10a, 10b, 10d, 66) pour recevoir le substrat (12), un tube rigide (16), également rempli de substrat (22) et ouvert à son extrémité inférieure et un dispositif formant pieds (38, 56) s'appuyant sur le fond du pot,
caractérisé en ce que le dispositif formant pied présente une partie annulaire (40, 58) pouvant être mise en place de façon amovible sur le tube (16) et sur laquelle sont fixés des pieds (42) en forme de pieux, qui prennent appui sur le fond du pot et qui forment des sorties latérales et en ce que le tube (16) est enveloppé par une couche (18) de matériau fibreux non transparente et calorifuge.

2. Système de plantation suivant la revendication 1, caractérisé en ce que le matériau du tube (16) est constitué de matière plastique, de métal ou de bois.

3. Système de plantation suivant la revendication 1 ou la revendication 2, caractérisé en ce que le tube (16) est un tube de bambou.

4. Système de plantation suivant l'une des revendications 1 à 3, caractérisé en ce que le tube (16) est rectiligne ou est courbé, entre ses deux extrémités, suivant une forme choisie.

5. Système de plantation suivant l'une des revendications 1 à 4, caractérisé en ce que le tube (16) présente, à son extrémité supérieure, un élargissement (28), de préférence un élargissement en forme d'entonnoir.

6. Système de plantation suivant la revendication 5, caractérisé par un entonnoir séparé que l'on peut engager dans l'extrémité supérieure du tube.

7. Système de plantation suivant l'une des revendications 1 à 6, caractérisé en ce que le tube présente entre ses extrémités, des branches de dérivation (32) qui s'étendent obliquement vers le haut.

8. Système de plantation suivant l'une des revendications 1 à 7, caractérisé en ce que le matériau de fibres est fixé au moyen de fils (20) enroulés, de préférence en enroulement croisé.

9. Système de plantation suivant l'une des revendications 1 à 7, caractérisé en ce que le matériau de fibres est fixé au tube par collage.

10. Système de plantation suivant l'une des revendications 1 à 9, caractérisé en ce que le pot de plantation présente, sur sa face intérieure, une couche (36), de préférence en fibre de coco.

11. Système de plantation suivant l'une des revendications 1 à 10, caractérisé en ce que le tube est engagé dans la partie annulaire (14) et en ce que la partie annulaire présente un épaulement sur lequel repose l'extrémité du tube.

12. Système de plantation suivant l'une des revendications 11, caractérisé en ce que le tube est glissé par dessus la partie annulaire, de préférence avec frottement, et repose, avec son extrémité, sur un épaulement annulaire (62).

13. Système de plantation suivant l'une des revendications 1 à 12, caractérisé en ce que le substrat situé dans le tube est un matériau en poudre, en grains, ou similaire, qui se gonfle au contact de l'eau.

14. Système de plantation suivant l'une des revendications 1 à 13, caractérisé en ce que les pieds du dispositif formant pieds s'étendent jusqu'au bord du fond (64) du pot.
